# EUROPEAN PATENT SPECIFICATION

(11) **EP 3 899 297 B1**
(45) Date of publication and mention of the grant of the patent: **11.03.2026**
(21) Application number: 19845834.1
(22) Date of filing: 06.12.2019
(51) Int. Cl.: F16D 3/18, B21B 35/14, F16N 9/02, F16N 11/04

(54) **DRIVE SHAFT WITH UNIVERSAL JOINTS WITH SLIDABLY INTERENGAGING TEETH COUPLINGS WITH AUTOMATIC LUBRICATION**
ANTRIEBSWELLE MIT GELENKKUPPLUNGEN MIT GLEITEND INEINANDERGREIFENDEN ZÄHNEN MIT AUTOMATISCHER SCHMIERUNG
ARBRE D'ENTRAÎNEMENT AVEC JOINTS UNIVERSELS COMPORTANT DES DENTS D'ENGRÈNEMENT COULISSANT AVEC LUBRIFICATION AUTOMATIQUE

(30) Priority: 18.12.2018 IT 201800020029
(43) Date of publication of application: 27.10.2021
(73) Proprietor: Green Gear Trasmissioni S.r.l., 14011 Baldichieri d'Asti (IT)
(72) Inventor: GRAZIANO, Fulvio, 14011 BALDICHIERI D'ASTI (IT)
(74) Representative: Garavelli, Paolo
(86) International application number: PCT/IT2019/000114
(87) International publication number: WO 2020/129097

(56) References cited:
- DE-A1- 4 123 639
- DE-C- 970 245
- GB-A- 1 312 061
- US-A- 3 357 208
- US-A- 4 137 999
- US-A1- 2014 194 214
- US-A1- 2018 031 046

## Description

The present invention referes to a gear-type elongating element with automatic lubrication, in particular for applications on big-sized plants, to manufacture sheets, beams, iron and steel profiles or for naval, railway, mining applications, or in cement plants, pipelines, etc.

Such gear-type elongating elements are used for transmitting motion in big-sized kinematic chains, and, due to their prolonged use in dusty, hot ahd humid environments, are subjected to various problems of wear, malfunctions and the like. In order to solve such problems, the currently-used elongating elements are lubricated with various devices (for example the one known from document US-B1-5979207) and theie lubrication is performed through an enter of grease inside a chamber in which the toothing work. The grease is inserted approximately once every month, but during this period it is consumed, being transformed into heat, and therefore the chamber itself willl have a lower amount of grease and a slight depression due to its volumetric decrease, which attracts polluting agents inside it.

Object of the present invention is solving the above prior art problems, by providing a gear-type elongating element equipped with a device which allows an automatic, correct and constant lubrication for the whole working life of the elongating element and decrease the greasing interval to once every three months. The state of the art is US4137999, DE970245, US2014194214 and US3357208.

The above and other objects and advantages of the invention, as will result from the following description, are obtained with a gear-type elongating element with automatic lubrication as claimed in claim 1. Preferred embodiments and non-trivial variations of the present inventino are the subject matter of the dependent claims.

It is intended that all enclosed claims are an integral part of the present description.

The present invention will be better described by some preferred embodiments thereof, provided as a non-limiting example, with reference to the enclosed drawings, in which:

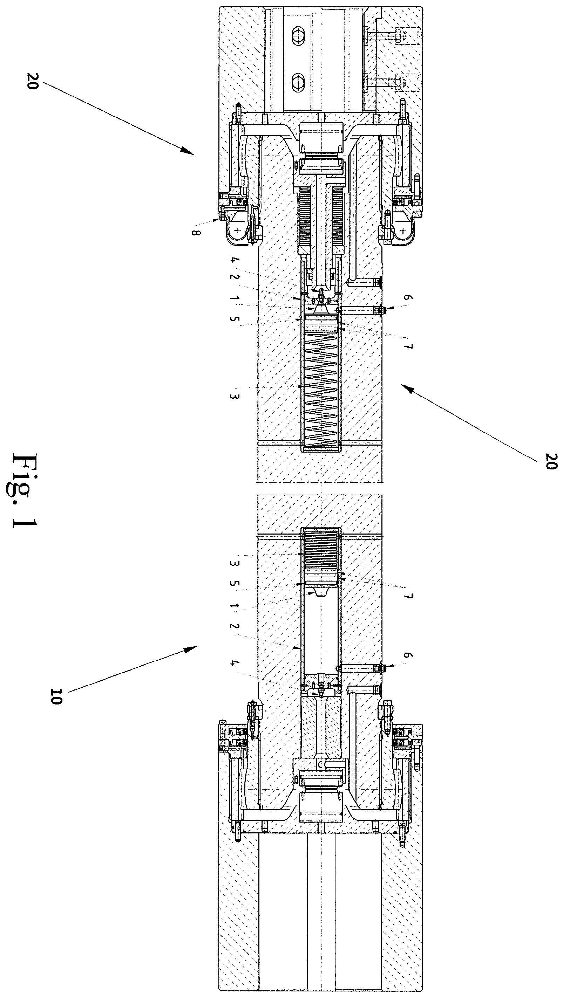

- Figure 1 is a partial side sectional view of an embodiment of the elongating element according to the present invention;

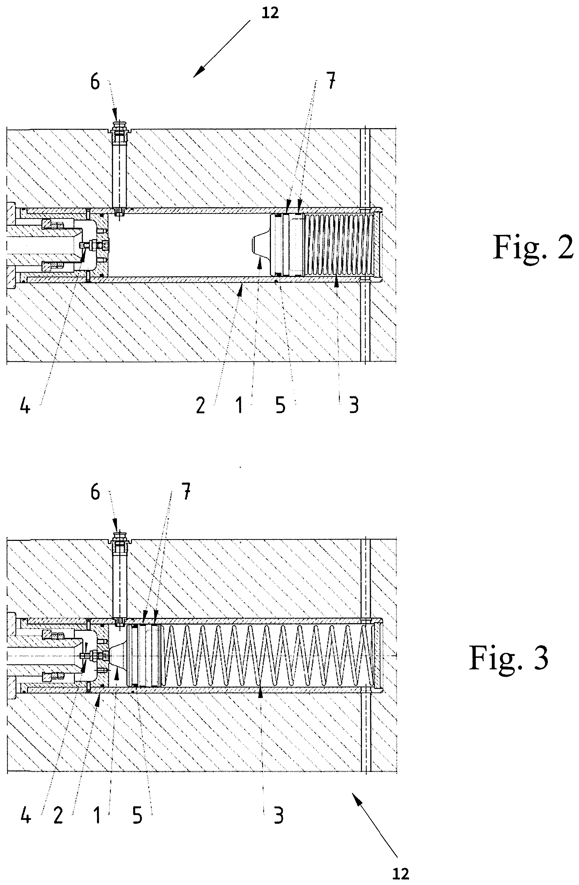

- Figure 2 is a detailed side sectional view of the elongating element of Figure 1 with its spring loaded; and
- Figure 3 is a detailed side sectional view of the elongating element of Figure 1 with its spring unloaded.

With reference to the Figure, a preferred embodiment of the present invention is shown and described. It will be immediately obvious that numerous variations and modifications (for example related to shape, sizes, arrangements and parts with equivalent functionality) can be made to what is described, without departing from the scope of the enclosed claims.

According to the Figures, the elongating element 10 between two geared heads 20 of the present invention is equipped with an automatic lubrication through a system which operates in order to have a continuous lubrication of the toothing and of the thrusting parts; moreover, it creates inside the elongating element an overpressure condition with respect to the outside, preventing the external polluted agents (such as lamination water, vapours etc.) from getting in contact with the grease which lubrifies the toothing. Moreover, in case of internal overpressures, an axially placed valve exhausts the excess pressure.

With reference to the Figures, the elongating element 10 is equipped with at least one cartridge 12 composed of a cylinder 2, inside which a piston 1 equipped with seals 5, 7, slides and is actuated by thrusting means 3 (in this case a coil spring, but it could also be a gas spring or other equivalent thrusting system).

The lubricating grease goes out of the top of the cartridge 12 through a hole 4 with an adequate diameter and computed for its necessary use, while the cartridge 12 is filled from outside through a suitable system of greasers 6.

The elongating element 10 is then preferably equipped with an over-pressure valve 8, which exhaust the excess pressure in the system.

## Claims

1. Elongating element (10) designed to mutually connect two geared heads (20) for kinematic chains of big-sized plants, to manufacture sheets, beams, iron and steel profiles or for naval, railway, mining applications, or in cement plants or pipelines, wnerein said elongating element is equipped with at least one lubricating cartridge (12) composed of a cylinder (2), inside which a piston (1) slides and is actuated by thrusting means (3), said cartridge (12) being designed so that lubricating grease goes out of the top of the cartridge (12) through a hole (4), while the cartridge (12) is filled from outside through a system of greasers (6), said elongating element (10) being designed to provide an automatic and continuous lubrication of toothing and thrusting parts of said heads (20), said elongating element (10) having therein an overpressure condition with respect to the outside, which prevents external polluted agents, such as lamination water or vapours, from getting in contact with the grease which lubrifies the toothing of said heads (20), **characterised in that**
the elongating element (10) is further equipped with an over-pressure valve (8) designed to exhaust an excess pressure in said elongating element (10), and
wherein said piston (1) is equipped with seals (5, 7).

2. Elongating element (10) according to claim 1, **characterized in that** said thrusting means (3) are composed of a coil spring.

3. Elongating element (10) according to claim 1, **characterized in that** said thrusting means (3) are composed of a gas spring.

## Patentansprüche

1. Ein Verlängerungselement (10) zur Verbindung zweier Getriebeköpfe (20) für kinematische Ketten in Großanlagen, zur Herstellung von Blechen, Trägern und Stahlprofilen oder für Anwendungen in der Schifffahrt, im Eisenbahnwesen, im Bergbau, in der Zementindustrie oder in Ölpipelines, das Verlängerungselement ist mit mindestens einer Schmierstoffkartusche (12) ausgestattet, die aus einem Zylinder (2) besteht, in dem ein von einem Schubmittel (3) angetriebener Kolben (1) gleitet, die Kartusche (12) ist so konstruiert, dass das Schmierfett durch eine Öffnung (4) an der Oberseite austritt, während die Kartusche (12) von außen über ein System von Schmiernippeln (6) befüllt wird, das Verlängerungselement (10) gewährleistet die automatische und kontinuierliche Schmierung der Zähne und Schubteile der Getriebeköpfe (20), im Inneren des Verlängerungselements (10) herrscht ein Überdruck gegenüber der Umgebung, der verhindert, dass äußere Verunreinigungen wie Wasser oder Dämpfe mit dem Schmierfett in Kontakt kommen. (20),
**dadurch gekennzeichnet, dass** das Verlängerungselement (10) ferner mit einem Überdruckventil (8) ausgestattet ist, das dazu dient, überschüssigen Druck in diesem Verlängerungselement (10) abzulassen, und
wobei der Kolben (1) mit Dichtungen (5, 7) versehen ist.

2. Verlängerungselement (10) nach Anspruch 1, **dadurch gekennzeichnet, dass** die Schubvorrichtung (3) aus einer Spiralfeder besteht.

3. Verlängerungselement (10) nach Anspruch 1, **dadurch gekennzeichnet, dass** die Schubvorrichtung (3) aus einer Gasfeder besteht.

## Revendications

1. Élément d'extension (10) conçu pour relier deux têtes d'engrenage (20) destinées aux chaînes cinématiques d'installations industrielles de grande envergure, pour la fabrication de tôles, de poutres, de profilés en acier ou pour des applications navales, ferroviaires, minières, cimentières ou pétrolières, ledit élément d'extension étant équipé d'au moins une cartouche de lubrification (12) constituée d'un cylindre (2) à l'intérieur duquel coulisse un piston (1) actionné par un système de poussée (3), ladite cartouche (12) étant conçue de manière à ce que la graisse lubrifiante s'écoule par le haut de la cartouche (12) à travers un orifice (4), tandis que la cartouche (12) est remplie de l'extérieur par un système de graisseurs (6), ledit élément d'extension (10) étant conçu pour assurer la lubrification automatique et continue des dents et des parties de poussée desdites têtes (20), ledit élément d'extension (10) présentant à l'intérieur une surpression par rapport à l'extérieur, ce qui empêche les agents polluants externes, tels que l'eau ou les vapeurs, d'entrer en contact avec la graisse lubrifiant les dents desdites têtes (20),
**caractérisé en ce que** l'élément d'extension (10) est en outre équipé d'une soupape de surpression (8) conçue pour évacuer la surpression dans ledit élément d'extension (10), et
dans lequel ledit piston (1) est équipé de joints (5, 7).

2. Élément d'extension (10) selon la revendication 1, **caractérisé en ce que** lesdits moyens de poussée (3) sont constitués d'un ressort spiral.

3. Élément d'extension (10) selon la revendication 1, **caractérisé en ce que** lesdits moyens de poussée (3) consistent en un ressort à gaz.
